Europäisches Patentamt

European Patent Office

Office européen des brevets

(19)

(11) Publication number: 0 313 787
A2

## (12) EUROPEAN PATENT APPLICATION

(21) Application number: 88115087.4

(51) Int. Cl.⁴: G06F 12/02

(22) Date of filing: 15.09.88

(30) Priority: 29.10.87 US 114795

(43) Date of publication of application:
03.05.89 Bulletin 89/18

(84) Designated Contracting States:
DE FR GB

(71) Applicant: International Business Machines
Corporation
Old Orchard Road
Armonk, N.Y. 10504(US)

(72) Inventor: Melton, Evelyn Au
20 Rothenburg Road
Poughkeepsie New York 12603(US)
Inventor: Norton, Vern Alan
11 Ridge Road
Croton-on-Hudson New York 10520(US)

(74) Representative: Jost, Ottokarl, Dipl.-Ing.
IBM Deutschland GmbH Patentwesen und
Urheberrecht Schönaicher Strasse 220
D-7030 Böblingen(DE)

(54) A hardware mechanism for the dynamic customization of permutation using bit-matrix multiplication.

(57) The objects of the present invention are accomplished in general by a versatile general purpose hardware address permutation system for mapping logical to physical device addresses including the capability of selecting any one of a family of address permutation matrices, which produce address mappings which decrease contention associated with stride accesses and other problems. The resultant system allows uniform accesses for any power-of-two strides, but does not cause contention problems for other stride accesses. The matrices and resultant mappings are based on transformations that are linear over the Boolean field GF(2) and involve a bit-matrix multiplication of the target address with successive rows of the matrix. The hardware system is of significant value in primary and/or secondary memory systems of SIMD or MIMD machines, and can eliminate memory hot-spot problems associated with the stride access pattern of an application. The hardware required may be incorporated in the address translation unit of the host computer and comprises a storage unit for storing a plurality of different matrices, a bit-matrix multiplication module, means for storing the permuted address and a control unit for accessing a predetermined matrix under system control and transferring the matrix and the N-bit field of the address to be permuted to the bit-matrix multiplication module where N permuted bits of address are generated by the bit-matrix multiplication of the address with N successive rows of said matrix. The procedure described herein can easily be implemented in hardware or software and a method is described for incorporating such transformations in a memory mapping unit of a highly parallel processing system. While the present invention has primary utility in large random access interleaved memory systems, it would also be applicable to large I/O systems such as direct access storage devices that require fast data retrieval for database applications.

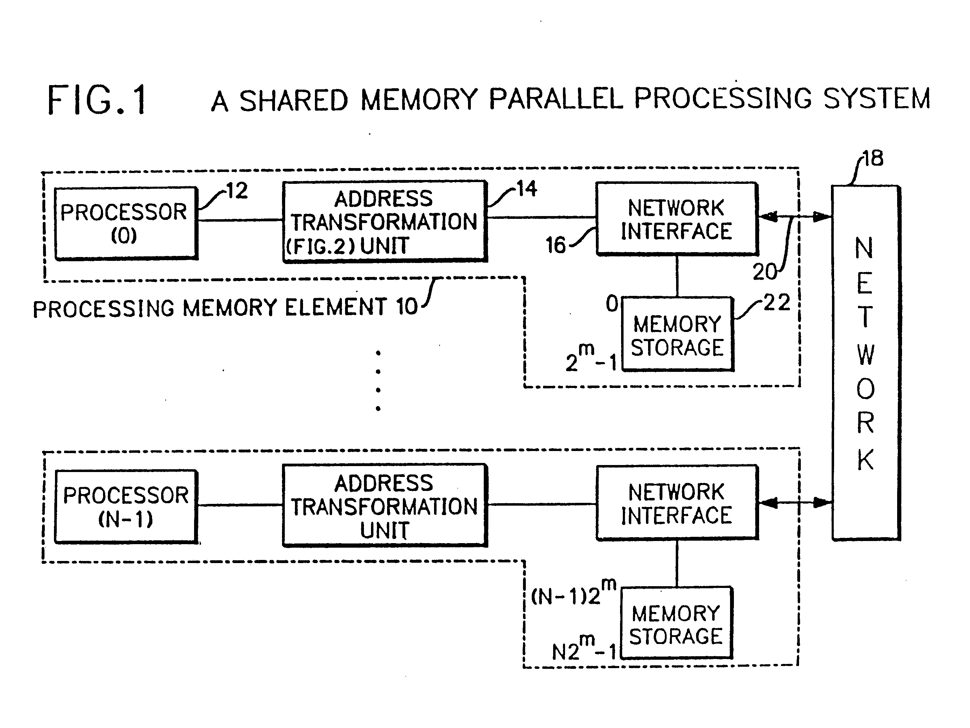

FIG.1 A SHARED MEMORY PARALLEL PROCESSING SYSTEM

| PROCESSOR (0) | ADDRESS TRANSFORMATION (FIG.2) UNIT | NETWORK INTERFACE |
|---|---|---|

~12   ~14   16~   20~   ~18

PROCESSING MEMORY ELEMENT 10

0
$2^m - 1$

MEMORY STORAGE ~22

N E T W O R K

| PROCESSOR (N-1) | ADDRESS TRANSFORMATION UNIT | NETWORK INTERFACE |
|---|---|---|

$(N-1)2^m$
$N2^m - 1$

MEMORY STORAGE

# A HARDWARE MECHANISM FOR THE DYNAMIC CUSTOMIZATION OF PERMUTATION USING BIT-MATRIX MULTIPLICATION

European Patent Application YO 986 052 filed on the same date as the present application entitled "AN APERIODIC MAPPING METHOD TO ENHANCE POWER-OF-TWO STRIDE ACCESS TO INTERLEAVED DEVICES" of K. P. McAuliffe et al, and assigned to the same assignee as the present invention, describes an address permutation/interleaving procedure for improving power-of-two stride access. This results in substantially equal utilization of all interleaved physical devices if they are referenced in any power-of-two stride. The key element of the procedure is a bit-matrix multiplication of an n bit logical address with a matrix consisting of p rows wherein each row contains n bits to produce a p bit physical address. When a suitable matrix is chosen addresses will be evenly distributed across the devices even with a power-of-two stride in the logical address.

The type of bit-matrix multiplication address permutation method disclosed in the copending application is the same as that generally described in and envisioned by the permutation architecture of the present invention. The invention of this copending application is directed to the broad method or procedure of achieving address permutations or hashing of a subject data field to achieve unique mappings onto another data field whereby unique advantages are obtained such as the elimination of undesirable address groupings in a large interleaved shared memory system where power-of-two stride access occurs frequently.

European Patent Application 85 113 174.8, entitled "DYNAMICALLY ALLOCATED LOCAL/GLOBAL STORAGE SYSTEM", discloses a highly parallel processing system having a large interleaved, shared memory system wherein the individual memory modules are distributed among the various processors. An interconnection network is provided together with a suitable memory management means so that any processor can readily access any memory module in the system. Further, the system architecture allows the concurrent accessing of all the modules, providing of course, that no conflicts exist e.g., more than one processor is trying to gain access to a particular module. The present memory mapping hardware which is designed to avoid or minimize such conflicts would have particular utility in the memory management facility of such a memory system.

The present invention relates generally to the field of multiple resource management in an electronic data processing system. More particularly, it relates to the effective utilization of all such resources at any one instant in time during data processing by performing one-to-one mapping of logical to physical addresses in, for example, a large shared interleaved memory system in a highly parallel processing environment. Still more particularly it relates to address generating hardware capable of performing a variety of one-to-one mappings.

In many modern high-performance computer systems, increased bandwidth to memory and I/O devices is obtained by the use of multiple interleaved devices. Interleaving is a way of permitting many accesses to occur at about the same time. Consider $n = 2^d$ devices, $D_0, D_2, \ldots, D_{n-1}$. Using interleaving, the contents of address m is stored in $D_q$, where $q = mod(m,n)$. By interleaving in this fashion, up to n references can be satisfied at the same time, particularly if those references are to nearby memory addresses. This will have substantial benefit in highly parallel shared memory systems if many processors are simultaneously working on consecutive addresses.

Problems occur in this situation if the addresses are not consecutive, but occur with a stride t such that t and n have a common factor i.e., $gcd(t,n) > 1$. Consider for example the sequence of addresses of stride kn (where $k \geq 1$, and $k \epsilon I$) given by a, a + kn, a + 2kn, a + 3kn, ... , a + (n - 1)kn, for some starting address a. If the interleaving above is used, all of these references will be addressed to the same device $D_{mod(a,n)}$. Such stride accesses occur frequently in application programs, for example in accesses to rows or columns of arrays. The performance impairment that results from such stride accesses becomes worse with very large numbers of processors, and can be a major serialization in such hardware.

In the following discussion references are made to prior art publications via brackets [ ] in the conventional manner. A list of these publications immediately follows this section.

The problem of nonuniformity of memory access is a serious problem in highly parallel systems, because such memory"hot spots" can result in"tree-blockage" [1]: Network as well as memory contention can limit the performance of the entire system to a rate determined by the device in contention. Such systems are particularly vulnerable to power-of-two stride access contention, because these references are usually interleaved among the devices and routed through the interconnection network by fields in the binary representation of their physical addresses.

In an SIMD parallel system, such as the ILLIAC IV [2] memory access conflicts can cause all processors to wait for the last memory access in a parallel operation. For that reason much effort has been devoted to schemes for eliminating or reducing contention associated with stride access.

Memory organizations which allow conflict-free access to any row, column, forward diagonal, and backward diagonal of an application's matrix array have been explored for the ILLIAC IV [2], the STARAN [3], and the BSP [4] computers. In most of these papers, arrays are accessed in a deterministic, conflict-free manner for a synchronized SIMD machine.

In [2], Budnik and Kuck, and [4], Lawrie and Vora proposed hardware and software solutions that require a prime number of memory modules. In [6] Lawrie proposed a system with M memory modules where M equals 2N, where N is the number of processing nodes. All of these solutions are intended to cause M and the stride access to be relatively prime. Batcher [3], and Frailong, Jalby, and Lenfant [7] used skewing schemes that perform XOR operations on indices of an array to map to individual memory units. Wijshoff and Leeuwen in [8] and Shapiro in [9] investigated the mathematical and theoretical limitations to these skewing schemes.

Alignment networks were further studied by Lawrie [6] to provide an alternative solution based on Stone's [10] shuffle-exchange operation to that of building expensive N x M crossbar switches for the access and storage of properly aligned data. Others, such as Lenfant [11] designed matrices of control patterns for an interconnection network that allows the dynamic permutation of data.

There are several major drawbacks to these schemes. Since they were primarily designed for special purposes, and have built-in dependence on array size and the number of memory modules, they are not suitable for general purpose computing environments that must satisfy more varied constraints. In addition, some of these designs required expensive and complicated addressing and alignment hardware for modulo operations and integer division. Finally, under-utilization of memory can result from "holes" in the address space created by these methods.

References

[1] Pfister, G.F., Norton, V.A.,"Hot Spot Contention and Combining in Multistage Interconnection Networks," IEEE Trans on Comp. C-34, No.10, Oct., 1985, pp. 943-948.

[2] Budnik, P., Kuck, D.J.,"The Organization and Use of Parallel Memories," IEEE Trans on Computers, Dec. 1971, pp. 1566-1569.

[3] Batcher, K.E.,"The Multidimensional Access Memory in STARAN," IEEE Trans on Comp, Feb., 1977, pp. 174-177.

[4] Lawrie, D.H., and Vora, C.R.,"The Prime Memory System for Array Access," IEEE Trans on Comp, C-31, No.5, May, 1982, pp.435-442.

[5] Kuck, D.J.,"ILLIAC IV software and application programming," IEEE Trans on Comp., vol.C-17, Aug., 1968, pp.758-770.

[6] Lawrie, D.H.,"Access and Alignment of Data in an Array Processor," IEEE Trans on Comp., vol. C-24, No.12, Dec., 1975, pp.1145-1150.

[7] Frailong, J.M., Lenfant, J.,"XOR-Schemes: A Flexible Data Organization in Parallel Memories," Proceedings, Internat Conf on Parallel Proceesing., Aug., 1985, pp.276-283.

[8] Wijshoff, H.A., Leeuwen, J.,"The Structure of Periodic Storage Schemes for Parallel Memories," IEEE Trans on Comp., Vol. C-34, No.6, June, 1985, pp. 501-505.

[9] Shapiro, H.D.,"Theoretical Limitations on the Efficient Use of Parallel Memories," IEEE Trans on Comp., Vol. C-27, No. 5, May, 1978, pp. 421-428.

[10] Stone, H.S.,"Parallel processing with the perfect shuffle," IEEE Trans Comp., Vol. C-20, Feb., 1971, pp. 153-161.

[11] Lenfant, J.,"Parallel Permutations of Data: A Benes Network Control Algorithm for Frequently Used Permutations," IEEE Trans on Comp., Vol C-27, No.7, July, 1978, pp. 637-647.

[12] Pfister, G. F., Brantley, W. C., George, D. A., Harvey, S. L., Kleinfelder, W. J., McAuliffe, K. P., Melton, E. A., Norton, V. A., and Weiss, J., "The IBM Research Parallel Processor Prototype (RP3): Introduction and Architecture," Proceedings, Internat Conf on Parallel Processing, 1985, pp. 764-771.

[13] Brooks, E.D.,"Performance of the Butterfly Processor-Memory Interconnection in a Vector Environment," Proceedings, Internat Conf on Parallel Processing, 1985, pp. 21-25.

[14] Mandelbrot, B.B.,"The Fractal Geometry of Nature,"W.H.Freeman and Company, N.Y., 1983.

In addition to the publications referenced above, the following represents a discussion of additional art known to the inventors which are considered relevant to but not anticipatory of the present invention.

U.S. Patent 4,484,262 of Sullivan et al discloses a memory manager in the form of a random number generator to "scramble" addresses going to all its associated memory modules. This memory manager may be implemented either as one central procedure or as a hierarchy of procedures. In the latter case when the procedure is distributed in the system some form of coordination must be possible to keep different logical addresses from resolving to the same physical address. It requires a substantial amount of hardware and overhead (the latter in the form of increased packet size through their network memory manager) to be implemented in a computer system. It is a very costly solution for increasing the memory bandwidth for highly parallel systems. When one changes the system configuration and the number of sources and memory units for a highly parallel computer system, the hardware proposed in this patent would require a complete rebuild in order to rescale.

The underlying address transformation mechanism of the present invention is designed to provide a permutation of addresses to parallel devices. The characteristic of such a matrix guarantees that different logical addresses will not resolve to the same physical address. In addition, the present invention is specifically designed to solve power-of-two stride accesses where data may otherwise be grouped in subsets of the total available memory modules using other methods of hashing or randomization.

In an article by R. N. Langmaid entitled "Versatile Programmable Logic Array" appearing in the IBM Technical Disclosure Bulletin, Volume 25, Number 8, January 1983, pp. 4445-4449, a logic array or matrix is disclosed which, it is stated, can be used for hashing (see page 4448). However, there is no suggestion as to how it would be used to hash addresses in a parallel processing computer system having a large shared interleaved memory organization.

A number of additional references are known to the inventors but are considered of a background nature only. The majority of them disclose virtual memory systems utilizing hashing in their address translation function. These U. S. Patent reference numbers are listed below:

| | |
|---|---|
| 3,691,531 | 4,433,389 |
| 4,157,587 | 4,484,272 |
| 4,167,782 | 4,550,367 |
| 4,249,242 | 4,587,610 |
| 4,395,757 | 4,588,985 |

The following references generally disclose some form of multiplication or logic matrix but neither disclose nor suggest bit-matrix multiplication or the application of same to memory mapping procedures.

1. IBM Technical Disclosure Bulletin, Matyas et al, Volume 24, Number 5, October 1981, pp. 2335-2336, entitled "Electronic Signature for Use with Data Encryption Standard".

2. IBM Technical Disclosure Bulletin, Lubold et al, Volume 28, Number 2, July 1985, pp. 603-604 entitled "Matrix Digital Signature For Use with the Data Encryption Algorithm".

3. IBM Technical Disclosure Bulletin, Anglin et al, Volume 16, Number 7, December 1973, pp. 2223-2234 entitled "Information Retrieval Technique".

4. IBM Technical Disclosure Bulletin, Matyas et al, Volume 24, Number 5, October 1981, pp. 2232-2234 entitled "Electronic Signature for Data Encryption Standard".

It is a primary object of the present invention to provide a hardware mechanism for improving server utilization efficiency especially in large highly parallel processing systems.

It is a further object of the invention to provide such a mechanism having utility in any computing system with a large number of random access interleaved devices. Such devices include concurrently accessible servers including I/O devices such as large DASD systems, random access memory modules of a SIMD or MIMD highly parallel processing system, and in fact all randomly accessible hierarchical primary and/or secondary memory systems are applicable.

It is a further object of the invention to provide such a mechanism for permuting a logical address presented to the memory management system to a physical address having a global effect whereby the utilization of individual memory modules is highly optimized across the system at any one time, and in particular for logical addresses that have stride accesses in powers-of-two.

It is yet another object of the present invention to provide such a mechanism for effecting the permutation by means of a bit-matrix multiplication of a logical address with a given matrix to produce a unique physical address.

It is a further object of the invention to provide such a mechanism wherein any one of a plurality of different matrices may be accessed for use in the permutation procedure, each having a different effect on the address mapping to accommodate different system configurations or characteristics of data access patterns.

It is a further object of the invention to provide such a mechanism wherein the plurality of matrices are stored in a readily accessible storage medium and a general purpose hardware mechanism is provided for permuting an address of predetermined dimensions with a matrix having the same dimensions.

It is a further object of the invention to provide such a mechanism whereby only a simple instruction will cause the proper matrix to be accessed and used in the permutation procedure.

The objects of the present invention are accomplished in general by a versatile general purpose hardware address permutation system for mapping logical to physical device addresses including the capability of selecting any one of a family of address permutation matrices, which produce address mappings which decrease memory and network contention associated with stride accesses. The resultant system allows uniform accesses for any power-of-two strides, but does not cause contention problems for other stride accesses. The matrices and resultant mappings are based on transformations that are linear over the Boolean field GF(2) and involve a bit-matrix multiplication of the target address with successive rows of the matrix.

The hardware system is of significant value in primary and/or secondary memory systems of SIMD or MIMD machines, and can eliminate memory hot-spot problems associated with the stride access pattern of an application. The hardware required may be incorporated in the address translation unit of the host computer and comprises a storage unit for storing a plurality of different matrices, a bit-matrix multiplication module, means for storing the permuted address and a control unit for accessing a predetermined matrix under system control and transferring the matrix and the N-bit field of the address to be permuted to the bit-matrix multiplication module where N permuted bits of address are generated by the bit-matrix multiplication of the address with N successive rows of said matrix. The procedure described herein can easily be implemented in hardware or software and a method is described for incorporating such transformations in a memory mapping unit of a highly parallel processing system.

While the present invention has primary utility in large random access interleaved memory systems, it would also be applicable to large I/O systems such as direct access storage devices that require fast data retrieval for database applications.

In the drawings

Fig. 1 comprises a functional block diagram of a highly parallel processing system having a shared memory. Each processor has associated with it a memory module which is accessible by all other processors via a multistage interconnection network;

Fig. 2 is a functional block diagram of an address transformation unit embodying the principle of the present invention which could be utilized in the system of Fig. 1;

Fig. 3 comprises a simplified high level block diagram of the matrix multiply unit shown in Fig. 2 incorporating the features of the present invention;

Fig. 4 comprises a detailed functional block diagram showing data flow of the matrix multiply unit of Fig. 3;

Fig. 5 comprises a logical block diagram of an inner-product block such as shown in Fig. 4;

Fig. 6 comprises a functional block diagram of an inverted baseline network such as might be used as the multistage interconnection network in the parallel processing shared memory system of Fig. 1, the use of which clearly illustrates the advantages of the present invention;

Fig. 7 is a graph comparing the three different methods of interleaving: the matrix multiplication method as set forth in this invention, a straight interleaving without hashing, and a pure random function. The graph is plotted with $\log_2$ of stride as the x-axis, and the maximum number of collisions (i.e., maximum of total accesses to each memory module) as the y-axis. The stride accesses used in the illustrated experiment are in various powers of two;

Fig. 8 is a graph comparing the straight interleaving method and the same pure random function as used for Fig. 6. The graph is plotted with stride as the x-axis, and the maximum number of collisions (i.e., maximum of total accesses to each memory module) as the y-axis. The stride accesses used in this experiment are from 1 to 100;

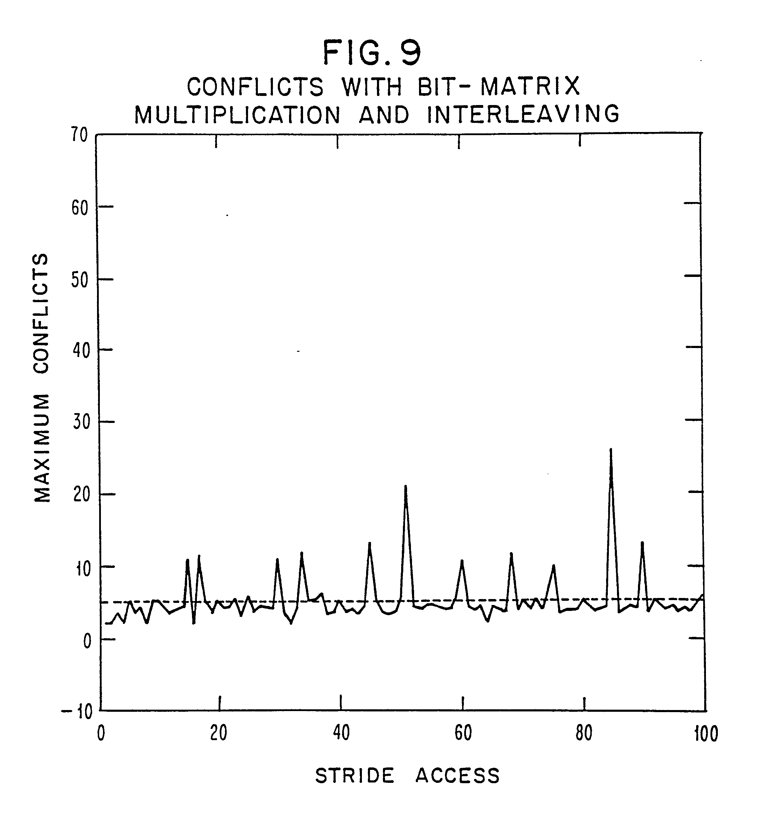

Fig. 9 is a graph comparing the matrix multiplication method as set forth in this invention, and the same pure random function as used for Fig. 7. The graph is plotted with stride as the x-axis, and the maximum number of collisions (i.e. maximum of total accesses to each memory module) as the y-axis. The stride accesses used in this experiment are from 1 to 100;

5

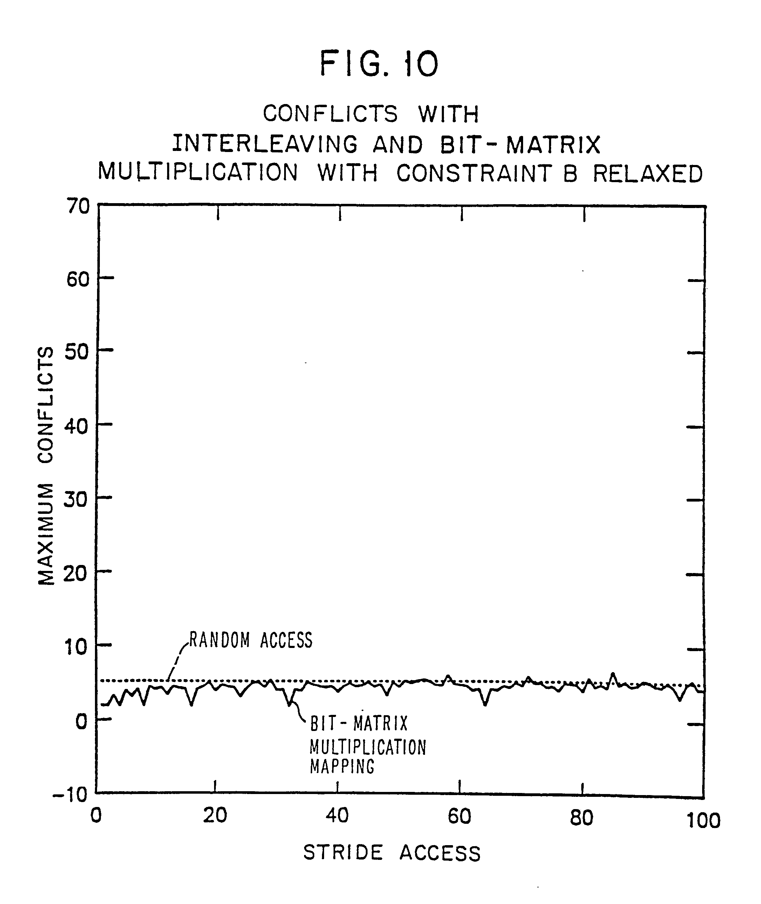

Fig. 10 is a graph similar to Fig. 8 wherein a matrix is utilized in the bit-matrix multiplication permutation operation which has the constraint (B) relaxed.

The method set forth and claimed inthe European Patent Application YO 986 052 overcomes many of the disadvantages of prior art memory management systems which employ known hashing techniques to achieve improved address distribution especially in large interleaved systems where power-of-two stride accesses are frequently encountered.

It is necessary that the underlying permutation method be clearly understood in order to understand and appreciate the value of the present invention which expands upon and enhances the value of the underlying address permutation procedure. The method permutes an address space by applying a Boolean (or binary) matrix multiplication. It will be clearly demonstrated that matrices can be chosen so as to eliminate power-of-two stride access contention in systems where the number of devices is a power-of-two. Such mapping can, for example, be used to eliminate contention associated with memory access in parallel radix two fast Fourier transforms. Though this technique applies especially to eliminate network and memory contention problems for all power-of-two stride accesses, it does not cause problems in excessive contention for all other non-power-of-two stride accesses.

The benefit in performance will be greatest in synchronous systems, such as SIMD machines, where the method can completely eliminate all power-of-two row and column access contention in what would have been a serial bottleneck. In asynchronous MIMD systems, or in I/O accesses, the improvement can be less dramatic, but sufficient to eliminate stride access as a performance detriment.

The method described can be efficiently implemented in hardware, and is appropriate to be included in the memory mapping or addressing hardware of the individual processors in a parallel system. Such hardware is included in the RP3 design [12] as will be described in a later section. It is advantageous to include such hardware in the design of a memory mapping unit in each processing element in a multiprocessor environment.

The general method of obtaining improved power-of-two stride access will first be described. An algebraic condition is derived and shown to be sufficient for eliminating power-of-two stride access conflicts to memory. A variant of this condition is shown to be sufficient for eliminating network conflicts as well. Procedures are given for the construction of bit-matrices satisfying the specified conditions. Performance analysis results are presented for one such matrix, showing the access conflicts associated with various strides. Finally, it will be shown how the method can be incorporated as part of the hardware address translation mechanism embodied in either hardware or software in a large shared interleaved memory system such as the experimental RP3 system referenced previously.

A Boolean r x s matrix is a rectangular array of binary bits, arranged in r rows and s columns. Such matrices describe linear mappings from the vector space $F^s$ of s-tuples of bits to the space of $F^r$ of r-tuples of bits. These are vector spaces over the field $F = GF(2)$ of two elements, $\{0,1\}$. Note that the addition and multiplication in that field are respectively the logical (Boolean) operations of "exclusive-or" and "and".

The linear transformation of multiplying a Boolean matrix $M = (m_{ij})$ times a Boolean s x 1 vector V is accomplished in the same manner as one multiplies matrices of integers: The $i^{th}$ element of the product MV is the"dot" product of the $i^{th}$ row of M with the vector V. This dot product is the sum (exclusive-or) of the s bits obtained by multiplying (ANDing) each entry $m_{ij}$ with $v_j$.

The method described herein relies on using the Boolean matrix multiply to apply a permutation to an address space. If the matrix M is a square invertible s x s matrix, multiplication by M defines a permutation on s-tuples of bits. By regarding s-bit addresses as s-vectors we thereby define a permutation mapping on a space of $2^s$ addresses.

For most of this discussion these addresses will be regarded as memory addresses, and the matrix multiplication will be employed in logical-to-physical address mapping. However, these same methods apply to addressing various other physical devices such as direct access storage media or high speed random access disk drives.

For the sake of definiteness, a system with $2^d$ physical devices will be assumed. Physical addresses in this system consist of s bits (where d < s). The first d bits identify the device number, and the last s - d bits identify the different addresses within a device. A logical address is defined as an s x 1 vector. The least significant bit of an address is the last ("bottom") element in the bit-string, and the most significant bit is the first ("top") element in the bit-string.

The algebraic constraints that determine the effect of a matrix on a given power-of-two stride will be described now. Conflict-free access with stride $2^t$ is desired, for some integer $t \geq 0$, across the $2^d$ physical devices. Optimally, consecutive references should go to different devices, with no device being referenced twice until each of the $2^d$ devices are referenced once. This implies that the $2^d$ addresses 0, $2^t$, 2 x $2^t$, 3 x

6

$2^t, ... , (2^d - 1) \times 2^t$ must all map to distinct physical devices.

The sequence of addresses described above forms a linear subspace S of the address space, if the logical address space is considered to be a Boolean vector space $F^s$ over the field F. In order for this space to be mapped uniformly across the physical memory devices, the first d rows of the matrix M are considered, because these rows determine the physical device associated with a logical address. Let M' be the d x s matrix consisting of the first d rows of M.

The mapping of the subspace S to physical devices is etermined by the d x d submatrix of M', consisting of d adjacent columns of M', columns s - t - d + 1, s - t - d + 2, ..., s - t for a stride of $2^t$. If that submatrix has maximal rank (rank = d), then the subspace S will map to $2^d$ distinct devices. Otherwise, S will be mapped to a smaller subspace of $F^d$, mapping to $2^k$ memory modules, for k ≤ d - 1.

If various power-of-two strides $2^t$, t = 0, 1, 2, ... are considered, the following condition is required to cause such stride access to uniformly access the $2^d$ devices:

o      (A) All d x d submatrices consisting of d consecutive columns of M' are nonsingular, wherein a matrix is defined as nonsingular if and only if its determinant is nonzero or the matrix is invertible.

It is noted that condition (A) was derived from considering just the $2^d$ consecutive power-of-two stride accesses starting at address 0. It does not imply uniform access from other starting addresses. However, if the $2^d$ accesses start at another address a, the effect is almost as good: the $2^d$ accesses will not reference any one device more than twice. Note that the mapping M is conflict-free not only on S, but also on any cosets a $\oplus$ S of S. If a stride access that begins at a ≠ 0, then it will intersect at most 2 such cosets, namely a $\oplus$ S and $(a + 2^{t + d})$ $\oplus$ S, $\oplus$ represents the logical bitwise XOR operation.

For an example of a matrix satisfying condition (A), see TABLE 1.

```
                            TABLE  1


               1   1   1   1   1   0   0   0

               0   1   0   1   0   1   0   0

               0   0   1   1   0   0   1   0

               0   0   0   1   0   0   0   1



       A  4  X  8  Matrix  satisfying  condition  (A).
```

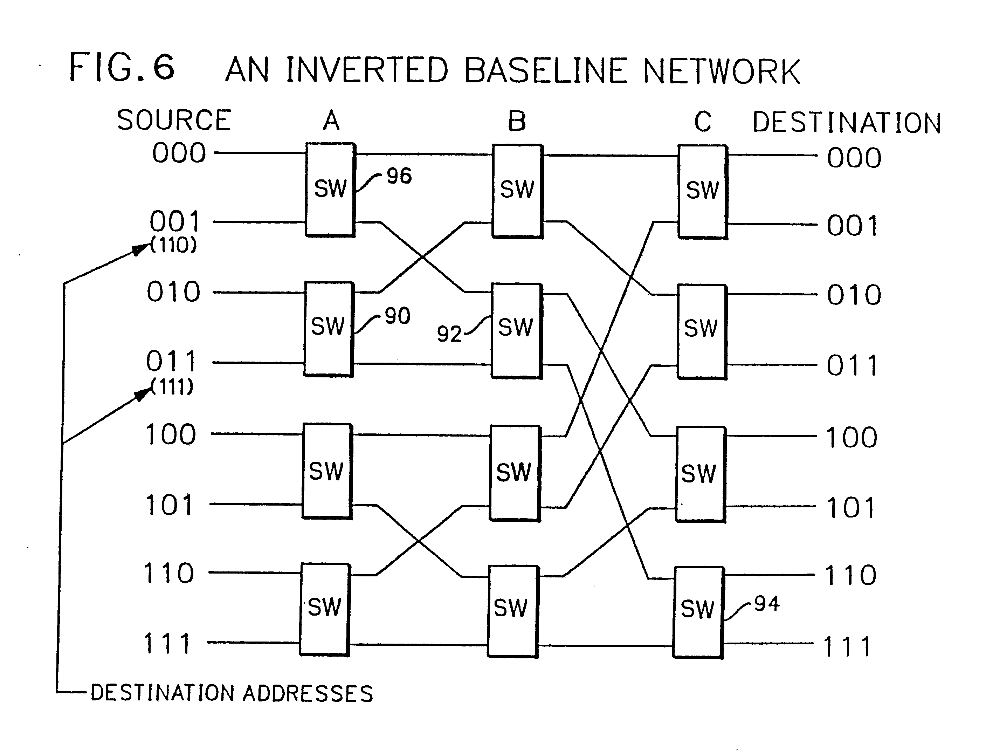

The above condition (A) implies reduced memory contention under power-of-two stride access. In many parallel systems, it is also possible to encounter contention going between processors and memory. Consider for example the inverted baseline network pictured in Fig. 6. For a processor to reference a memory module, it must transmit a message through the network to the specified module. Even if two messages are headed to different destinations, they may "collide" at a switch enroute to their destinations. Such conflicts can also be eliminated or reduced by the appropriate choice of an address transformation matrix.

An inverted baseline network, as illustrated in Fig. 6, is utilized to show how an appropriate matrix can be chosen; other networks can employ similarly chosen matrices. Note that the unique path from a processor to memory is given by a set of binary choices made at the various switches enroute. Furthermore, the bits used in that routing depend only on the destination memory module, not the originating processor, even though routing paths may be different.

If power-of-two stride access conflicts are to be eliminated in the network, it suffices to ensure that the various routes to memory are uniformly accessed. To do this, the various memory modules are numbered according to the route by which they are accessed: The first (most significant) bit is the routing bit for the first network stage; the second bit being the routing bit for the second stage; etc. This results in the numbering indicated in Fig. 6. According to the physical addressing scheme being used, these are also the most significant bits of the physical addresses of storage locations.

Now suppose that condition (A) is satisfied, not only for every $2^d$ square submatrix of M', but also for submatrices of size $2^j$, for all j ≤ d. In other words,

o      (B) Every square submatrix of M' that abuts on the top of M' is nonsingular.

7

This condition (B) then implies that any power-of-two stride access, starting at any address a, such that $S \wedge a = 0$ will result in uniform accesses to any of the subspaces of the physical address space defined by the first j bits of the address, wherein $\wedge$ represents the logical bitwise AND operation. For an example of a matrix satisfying condition (B), see TABLE 2.

```
                                TABLE  2


   1 0 1 0 1 0 1 0 1 0 1 0 1 0 1 0 1 0 1 0 1 0 1 0 1 0 1 0 1
   1 0 0 1 1 0 0 1 1 0 0 1 1 0 0 1 1 0 0 1 1 0 0 1 1 0 0 1 1
   1 0 0 0 1 0 0 0 1 0 0 0 1 0 0 0 1 0 0 0 1 0 0 0 1 0 0 0 1
   0 1 1 1 1 0 0 0 0 1 1 1 1 0 0 0 0 1 1 1 1 0 0 0 0 1 1 1 1
   0 0 1 0 1 0 0 0 0 0 1 0 1 0 0 0 0 0 1 0 1 0 0 0 0 0 1 0 1
   0 0 0 1 1 0 0 0 0 0 0 1 1 0 0 0 0 0 0 1 1 0 0 0 0 0 0 1 1
   0 0 0 0 1 0 0 0 0 0 0 0 1 0 0 0 0 0 0 0 1 0 0 0 0 0 0 0 1
   0 0 0 0 0 1 1 1 1 1 1 1 1 0 0 0 0 0 0 0 0 1 1 1 1 1 1 1 1


        A 9 X 29 Matrix satisfying condition (B).
```

This fact will be used to show that if all processors simultaneously access consecutive elements at the same stride (processor no. i accesses datum $i \times 2^l$) then there will be no conflicts in the network or at memory.

It is still assumed that $2^d$ memory modules are accessed by an inverted baseline network of d stages of two-by-two switches.

Consider any switch in the first stage of the network. The outputs from that switch are addressed by the most significant bit of the address. Because condition (A) is satisfied for the first row of the matrix, it is concluded that the two references in that switch, addressed to data items $i \times 2^l$ and $(i + 1) \times 2^l$ must necessarily differ in that bit.

Similarly in stage k of the network, assume that $2^d$ messages arrive simultaneously at the input ports of the various switches in stage k. Consider the first $2^k$ switches of that stage. Because condition (B) applies to row k (for $k \leq d$) of the matrix, it will be seen that the $2^k$ references arriving at that row must necessarily be routed to different output ports without contention. A similar argument applies to subsequent groups of $2^k$ switches in row k. It may be concluded that the entire $2^d$ references will pass through the network with no conflicts.

Even if the stride access to the network is not perfectly synchronized (as was assumed in the above proof) there may be substantial benefit in this method. It has been observed [13] that slight synchronization errors in stride-one vector access will be corrected by the contention delays in such networks. It is expected that a similar benefit will occur in power-of-two stride access, using a matrix memory mapping that satisfies (B).

The criteria (A) and (B) described previously for determining appropriate Boolean matrices are very important since they provide the characteristics of such matrices. A general procedure will now be described for constructing all matrices satisfying (B).

Theorem: Given a matrix of d rows and s columns, there exists a matrix M that satisfies condition (B). In fact, given any choice of subdiagonal bits $\{m_{ij} \mid i > j\}$, there is a unique Boolean matrix M having those subdiagonal elements and satisfying (B).

Proof: To obtain matrices satisfying (B), reason inductively on the rows of the matrix. Once the first k rows, $1 \leq k \leq s - 1$ have been chosen so as to satisfy (B), any choice of the remaining s - k rows that results in an invertible matrix M can be used.

Applying condition (B) to the first row implies that every element in that row must be 1, since the elements of that row are just the 1 x 1 submatrices.

Assume now that the first k - 1 rows have been chosen, and that all (k - 1) x (k - 1) square submatrices, formed by adjacent columns of the resulting $(k - 1) \times s$ matrix are invertible. Choose any $k - 1$ values (0 or 1) for the first $k - 1$ entries in row $k$. There is a value (either 0 or 1) $m_{kk}$ such that the resulting $k \times k$ corner submatrix is nonsingular. To prove this, expand the determinant D for that submatrix along its bottom row. The following is obtained:

$$D = m_{k1}D_{k1} + m_{k2}D_{k2} + ... + m_{kk}D_{kk}$$

Where, in the above expression, $D_{ij}$ represents the cofactor of the element $m_{ij}$.

Note that by inductive hypothesis the determinant $D_{kk}$ is nonzero, hence 1. It is now possible to choose $m_{kk}$. If the first $k - 1$ terms add to zero, $m_{kk}$ is chosen to be 1; otherwise choose $m_{kk}$ to be zero. In either case the square corner submatrix can be chosen to be nonsingular.

Proceeding along row $k$, the same argument can be applied always choosing $m_{k1}$, $1 > k$, so that the square submatrix having $m_{k1}$ in its lower right-hand corner is invertible. This completes the proof.

The above argument yields a construction of all matrices M satisfying condition (B). For each row $k$ of matrix M it is possible to choose the first $k - 1$ bits, and the remaining entries in that row are determined. There are precisely $2^{(d-1)d/2}$ matrices M, of d rows, satisfying (B).

One of these matrices that exhibits a symmetric pattern is illustrated in TABLE 2. Note how the one's in this matrix form a recursive pattern of repeating triangles; this fractal design is known as the "Sierpinsky gasket" [14]. In hindsight, it is possible to see an easier procedure for generating this matrix: Every element is the exclusive-OR of its neighbors to the right and above. This arrangement of bits is the binary equivalent of Pascal's triangle.

When the conditions (A) and (B) are satisfied, conflict-free access is guaranteed when the memory is accessed in power-of-two strides. Other strides are also important, and it would be desirable to have the same elimination of conflict for such strides as well. However, it is not possible to eliminate all stride access conflicts. If this system is to be of use in general purpose computer systems, it is important that no stride access produces a memory hot spot; or at least that memory contention problems resulting from stride access are extremely infrequent.

To deal with this problem some measures are defined of how well a given permutation deals with various stride accesses. Let M be a $d \times s$ matrix mapping of an s-bit address space, $F^s$, and assume a system of d devices. Thus M is a mapping from the set $F^s$ to the set $\{0,1,2,...,d - 1\}$. Let t and a be integers, where t is defined to be a stride, and a to be a starting address of the stride.

Consider the addresses in the stride, namely the set A consisting of $a, a + t, a + 2t, ..., a + (d - 1)t$. $C_i$ is defined to be the subset of V mapped to device i by M. I.e.,

$$C_i = \{x \epsilon V \mid M(x) = i\}$$

The nonuniformity of M with respect to (a,t) is defined to be the number of elements in the largest of the $C_i$'s.

$$M_{a,t} = \max_{0 \le i \le d - 1} |C_i|$$

This gives the largest number of times any one device is accessed during a stride access to the d addresses $a, a + t, a + 2t, ..., a + (d - 1)t$. At least, with conflict-free access, the nonuniformity is 1; at most, it is d. For any power-of-two stride accesses, using a permutation satisfying condition (A), the nonuniformity is either 1 or 2.

The nonuniformity of these functions has been measured for various starting addresses a and stride t, assuming a system of 512 memory modules, and using the $9 \times 29$ matrix as defined in TABLE 2. In such a system, if the randomization function is used to provide the device numbers, the nonuniformity would be about 5.16, a value which has been included in the graphs of Figs. 6, 7 and 8 for comparison. "Straight" interleaving has also been included to illustrate the inadequacy of such memory organization. The nonuniformity $Ma_{i,t}$ associated with starting address a, and stride t was calculated for each stride using 10,000 different randomly generated starting addresses $a_i$'s. The average of $Ma_{i,t}$'s over all i's are plotted against the stride t.

Other Matrices

9

In addition to the matrix specifically illustrated and described previously in TABLE 2 which satisfied the constraints of conditions A and B, the following matrix shown in TABLE 3 also satisfies conditions A and B.

```
                           TABLE  3

1 0 1 0 1 0 1 0 1 0 1 0 1 0 1 0 1 0 1 0 1 0 1 0 1 0 1 0 1
1 1 0 0 1 1 0 0 1 1 0 0 1 1 0 0 1 1 0 0 1 1 0 0 1 1 0 0 1
1 0 0 0 1 0 0 0 1 0 0 0 1 0 0 0 1 0 0 0 1 0 0 0 1 0 0 0 1
1 1 1 1 0 0 0 0 1 1 1 1 0 0 0 0 1 1 1 1 0 0 0 0 1 1 1 1 0
1 0 1 0 0 0 0 0 1 0 1 0 0 0 0 0 1 0 1 0 0 0 0 0 1 0 1 0 0
1 1 0 0 0 0 0 0 1 1 0 0 0 0 0 0 1 1 0 0 0 0 0 0 1 1 0 0 0
1 0 0 0 0 0 0 0 1 0 0 0 0 0 0 0 1 0 0 0 0 0 0 0 1 0 0 0 0
1 1 1 1 1 1 1 1 0 0 0 0 0 0 0 0 1 1 1 1 1 1 1 1 0 0 0 0 0
```

It should be noted that the top row of the matrix is all '1's in both TABLES 2 and 3 but the column of all '1's in TABLE 3 is shifted from $S^{28}$ to $S^0$. In TABLE 3 all of the other bit positions are determined by the exclusive-OR of the bit above and to the left. Another set of tables could also be constructed so that row $r^8$ is all '1's rather than row $r_0$. Thus the general rule for filling in bits of the matrix other than the edge row and column which are all '1's, may be generalized to say that the value of each bit is determined from the two previously generated bits closest to those edges of the matrix which are all '1's (unitary).

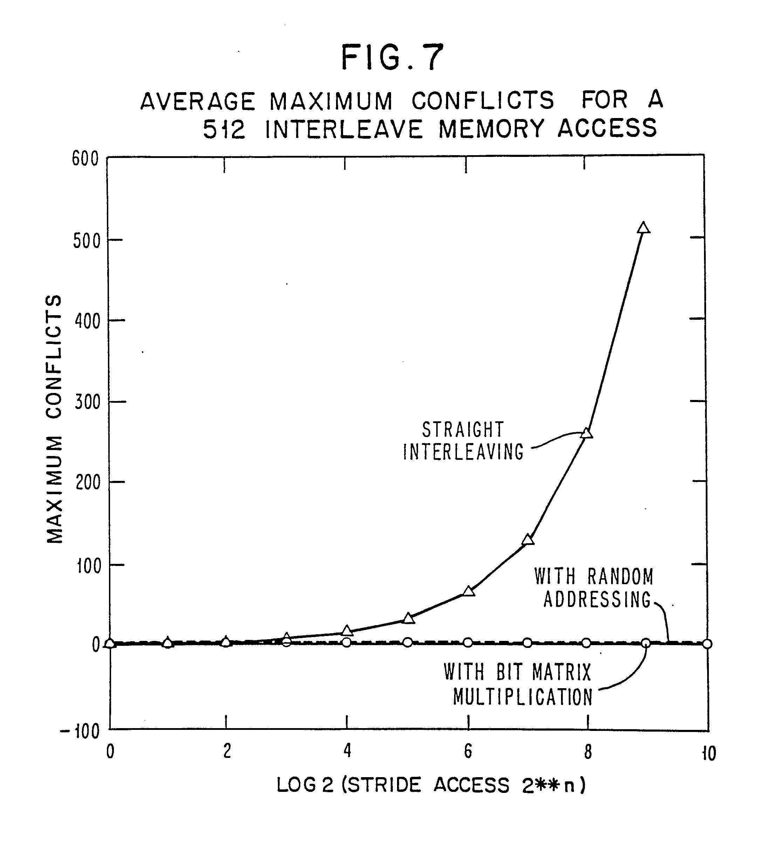

To illustrate the effectiveness of the technique, all power-of-two stride accesses from $2^0$ to $2^{10}$ were measured. As expected, all $Ma_{i,j}$'s are less than or equal to 2. On the other hand, conflicts with straight interleaving increase steadily with the greatest common division of the stride and the number of parallel memories up to a maximum of 512. The graph in Fig. 7 shows the bit-matrix-multiplication method as compared with pure interleaving and with randomization of device numbers.

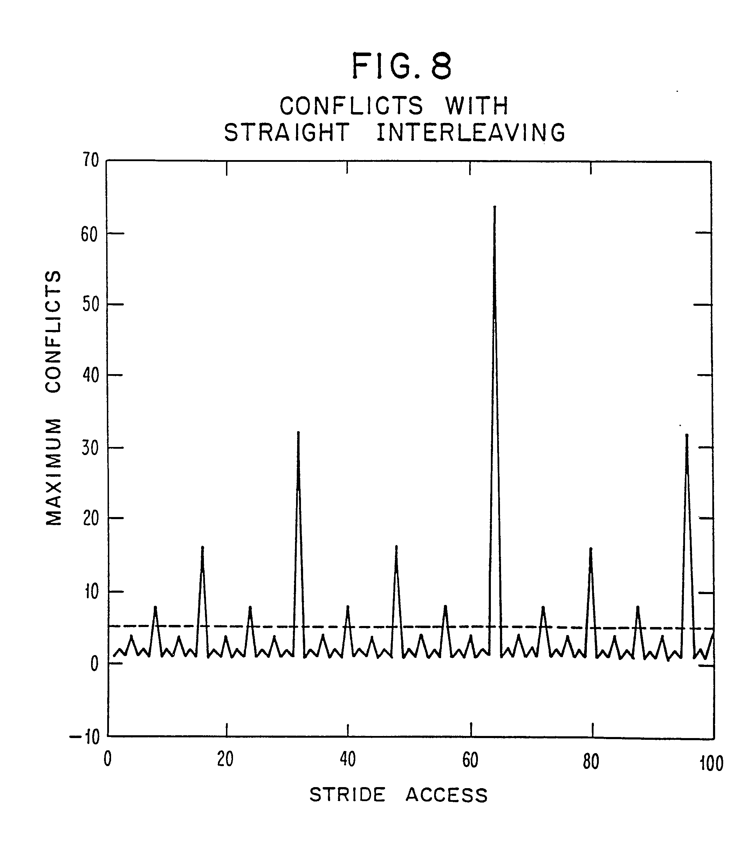

Similar samples were collected for strides from 1 to 100. The graphs in Figs. 7 and 8 give a comparison of the general behavior of "straight" interleaving versus the bit-matrix multiplication method with "straight" interleaving. In Fig. 7 it will be noted that high peaks occur at strides of 0, 2, 4, 8, 16, 32 etc., using a "straight" interleaving function. These peaks are considerably smoothed, as shown in Fig. 8, using the present bit-matrix multiplication permutation. The behavior of the method demonstrates that it performs "closer" to that of a random function than the "straight" interleaving for strides from 1 to 100.

It will be noted, however, that some of the sharp peaks still persist, suggesting that some strides are causing more contention than the "mean". These peaks can be smoothed out by a relaxation of constraint (B) and an example illustrating such behavior will be given in the following section.

It will be shown that by relaxing constraint (B) conflicts for non power-of-two strides can be reduced considerably.

A 9 x 29 matrix shown in TABLE 4 was constructed which conforms to constraint (A) but constraint (B) has been relaxed such that all K x K submatrices are nonsingular for $3 \leq K \leq 9$.

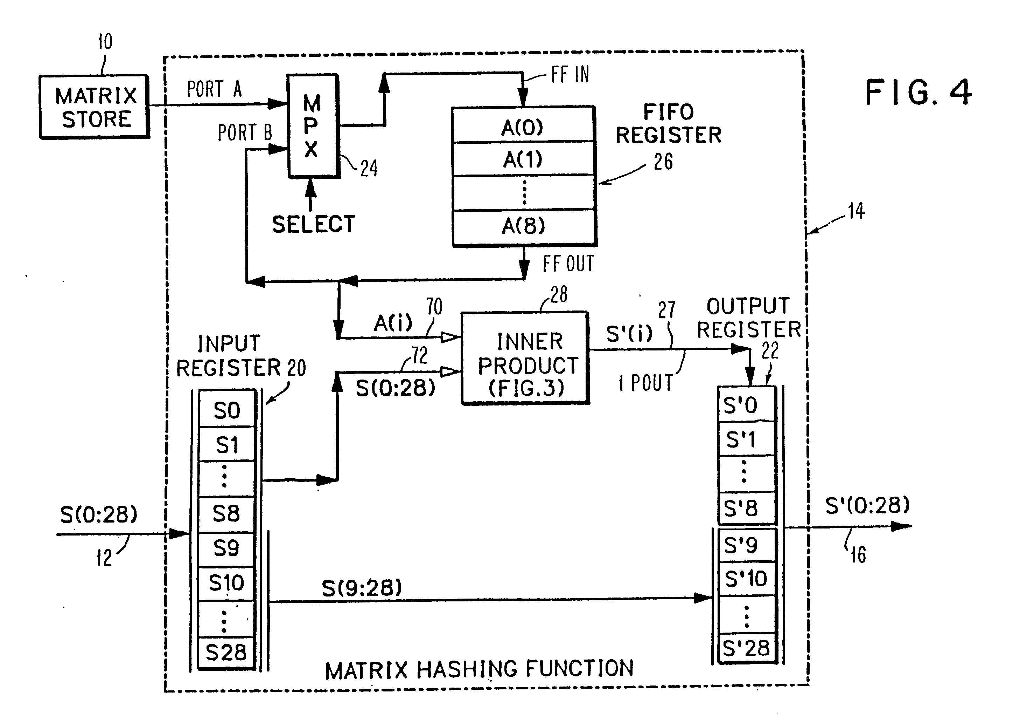

Since the TABLE 4 matrix satisfies constraint (A), its performance curve for all power-of-two strides should be the same as that for the matrices of TABLES 2 and 3 (as has been mentioned before in reference to Fig. 1). Therefore, we will only show its performance curve for strides from 1 to 100. This is shown in Fig. 4. The behavior of this curve approaches that of a randomly generated memory access pattern. Future investigation and research will be needed in order to provide some general guidelines and methodologies to generate an optimal matrix for one's operating environment.

```
                                    TABLE  4

 1 0 1 1 1 0 0 1 0 1 0 0 1 0 1 0 0 1 0 0 1 0 1 1 1 0 0 1 0
 0 1 0 1 0 1 1 0 1 0 1 1 0 1 0 1 1 0 1 1 0 1 0 1 0 1 1 0 1
 1 0 0 1 1 1 0 0 1 1 0 1 0 0 1 1 0 0 1 0 0 1 1 1 0 0 1 0 0
 0 1 0 0 0 1 1 1 0 1 1 1 0 0 0 1 1 1 0 0 0 1 0 0 0 1 1 1 0
 0 1 1 1 1 0 1 0 1 0 0 1 0 0 0 0 1 1 1 1 0 1 1 1 1 0 1 1 1
 1 1 0 0 0 1 0 1 0 0 1 0 0 0 0 0 1 0 0 1 1 1 1 0 0 0 0 0 1
 0 1 0 0 0 1 0 0 0 1 1 1 0 0 1 0 1 1 0 0 0 1 1 0 0 0 0 1 1
 1 0 0 1 1 1 1 0 0 0 0 0 0 0 1 0 1 1 0 1 1 0 1 0 1 0 1 1 0
 1 0 1 1 1 0 1 1 0 1 1 0 0 1 0 0 1 0 1 1 0 1 1 0 1 0 0 1 0
```

The previously described results of tests utilizing the the concepts ofthe European Patent Application YO 986 052 to reduce potential conflicts related to stride and the like were obtained using software simulation of the described mapping procedure. The following is a detailed description of a preferred hardware embodiment of the present invention together with a brief discussion of certain features of the invention which uniquely contribute to a preferred design of an address permutation unit incorporating the present inventive features wherein the bit-matrix multiplier used for the address mapping utilizes a minimum number of devices and circuit levels, both of which contribute significantly to the speed of operation and which readily provides for generating a wide variety of different permutations by only utilizing a different permutation matrix which can be generated and loaded into storage dynamically during program run time.

Given a Boolean matrix M, and a logical address vector V, the logical depth of the process of Boolean bit-matrix multiply is logarithmic in the number of columns s of the matrix. All elements in the product vector can be computed in parallel. Each element of the product vector is the exclusive-OR of those elements of V for which the corresponding element of M is 1. This can be computed in hardware by first computing the AND of each element of V with the corresponding element of M, then combining the s results in a binary tree of exclusive-OR's. Each resulting bit is, in fact, the parity of the result of a bitwise AND operation of the respective row of M and the vector V.

Because of the straightforward nature of the functions required of the hardware implementation of the present invention, it is possible to implement the Boolean matrix multiply as part of the address translation hardware within the individual processing elements of a parallel processing system. For example, in the Research Parallel Processing System (RP3) [12] referenced previously, all interleaved memory is designed, by default, to undergo such a transformation.

The design of a suitable hardware implementation having the above features is set forth in the figures.

This embodiment although designed primarily for address transformation has the general capability of utilizing the concept of address or other data permutations via bit-matrix multiplication.

Fig. 1 comprises a high level functional block diagram of a highly parallel processing shared memory system such as the previously referenced RP3 12 . This system comprises a plurality (up to 512) Processing Memory Elements 10 interconnected via a network 18. Each Processing Memory Element (PME) is envisioned as being substantially identical and comprises a micro-processor 12, an address transformation unit 14, a network interface 16, and a memory storage unit 22. The microprocessor 12 functions as most current conventional microprocessors and when necessary, accesses system memory for instructions and/or data. The address transformation unit 14 transforms a logical address issued by the processor into a physical address directly mappable to a physical location in memory. The network interface 16 determines whether a particular physical address resides in local memory 22 or must be accessed from another memory element 22 residing in another remote PME. Access to a remote memory unit 22 in another PME would be via the network 18. As will be remembered, the RP3 is a tightly coupled multi-processor system in which all memory is physically accessible to all processors. Further in the RP3, in addition to being shared, each of the memory storage units 22 is locally adjacent to a particular processor, such that access of local memory does not have to go through the network 18.

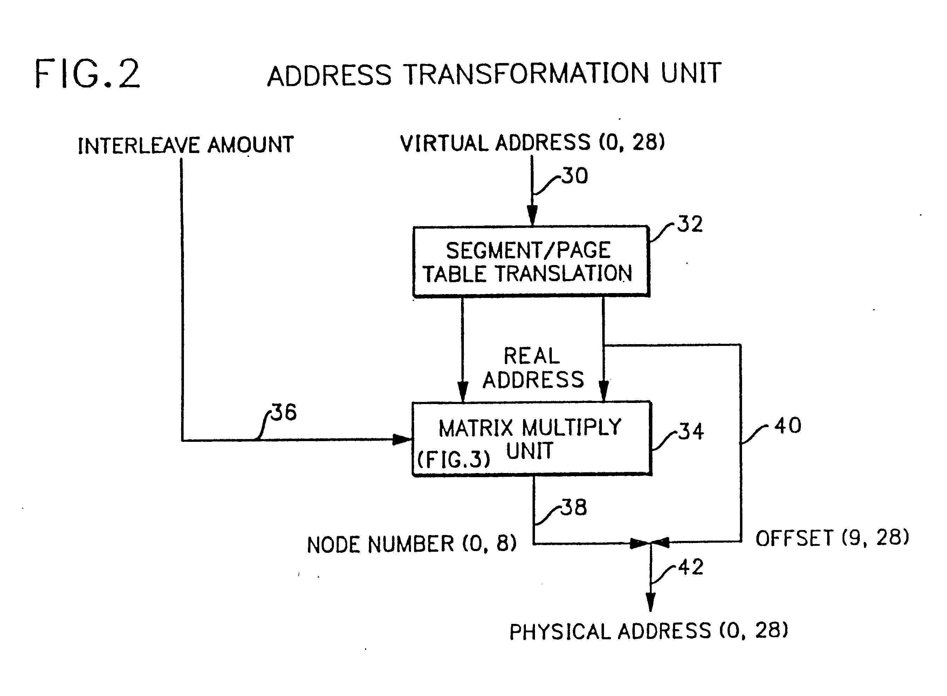

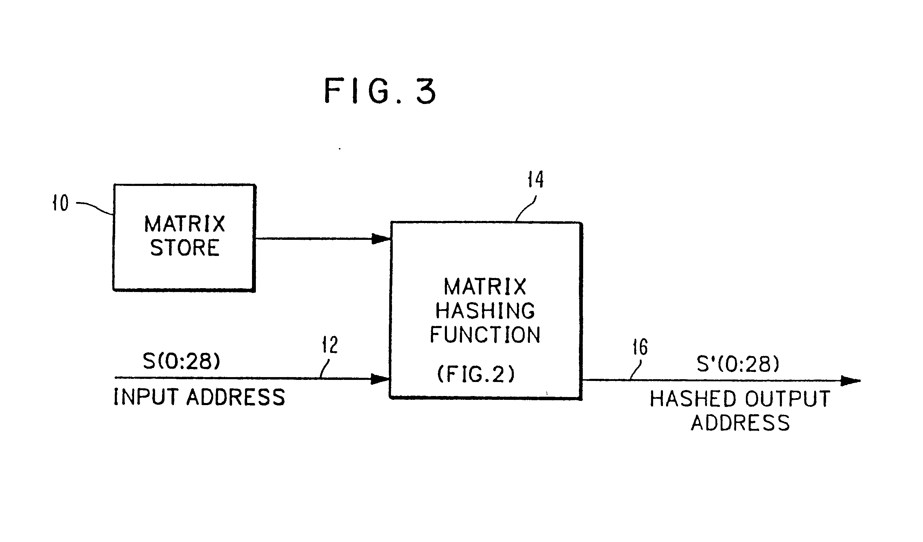

The details of the present invention are resident in the address transformation unit 14. A functional block diagram and data flow for this unit are shown in Fig. 2. As indicated in the figure, a 29 bit virtual address (0,28) is placed on input line 30 to the segment/page table translation unit 32. As is well known in such virtual addressing systems, the virtual address is translated into the real address via a page and segment table look-up in unit 32 as in most conventional virtual memory system. The result is a real address on line 34 in which bits 9 through 28 constitute an offset into the page of the real address and bits 0 through 8 indicate the segment and page of the real address. Bits 0 through 8 must be permuted into a node number by the matrix multiply unit which, stated differently, specifies into which memory of the overall system the particular address resides. However, all 29 bits of the real address are input into the matrix multiply unit 34. Again, it is assumed that the system contains 512 different PME's and associated separate memory storage units 22. Accordingly, 9 bits (0,8) are required to specify such a node address. The actual number of bits used for determining the node address and the number of offset bits depend on the interleave amount specified for a particular system configuration. Thus, if a particular system only comprised, for example, 256 PME's, then only 8 bits would be needed to specify the node number and accordingly, only 8 bits would be produced by the matrix multiply unit 34. These specific interleave amounts would appear on line 36 in the figure and would control (not specifically shown) how many bits of permuted output were produced. The actual permutation matrix is assumed to be stored and/or available to the matrix multiply unit 34 which could simply be a Read/Write Memory within the matrix multiply unit.

Assuming that 9 bits of permuted address were to be produced by the system, it will be understood that the entire 29 bit real address would be successively multiplied (9 times) with the first nine 29 bit rows of the permutation matrix, thus producing a 9 bit node address on line 38. This 9 bit node number or address would be combined with bits 9 through 28 on line 40 to produce the 29 bit physical address on line 42.

Referring next to Fig. 3, an overall functional block diagram of the general purpose hardware for performing a number of different hashing function operations is set forth. Block 10 refers to any large system storage device which could be RAM, or any well known memory system wherein a plurality of matrices having the required characteristics are stored and which may be accessed under system control. Assuming that an address is to be hashed, an input address S (0:28) is shown being presented on the input line 12 to block 14. Block 14 performs the actual bit matrix multiplication function and accumulates a hashed output address which is placed on line 16 as address S (0:28) which is presented to the memory accessing portion of the overall computing system as will be well understood.

As will also be obvious, a 29 bit address is utilized in this particular system, however, as will be equally apparent, a different address space or size could be utilized and an appropriate hashing function applied thereto according to the teachings of the present invention.

Referring now to Fig. 4, a functional block diagram of the system very generally disclosed in Fig. 3 is set forth. In this figure, a functional organization and data flow for a preferred embodiment of the invention is disclosed. All of the major functional components are set forth as well as the preferred data flow. This figure together with an explanation of the sequences of operations which must occur to effect the desired hashing function clearly set forth the principles of the present invention. It is noted that individual control lines to the various elements are not shown as these would be obvious to any digital engineer skilled in the computer arts.

Referring now to the figure, it will be noted that, similar to Fig. 3, the input address S is placed on line 12, the matrices are stored in block 10, and the output hashed address S' (0:28) appears on line 16 after the hashing operation is completed. The remainder of the circuitry, including the registers, the inner-product box, etc., perform the required operations of the matrix hashing function 14.

It should also be noted that in this embodiment, it is assumed that only nine bits of the input address need to be hashed as these are the high order bits which would perform the memory module selection in a large shared memory system as set forth generally above. With this situation a full 29 bit hashing matrix must be generated. However, since only the high order bits e.g., 0:8 need to be hashed, only the first nine rows of the matrix need enter into the hashing operation. Since bits 9:28 are not altered, they may be transferred directly from the input register 20 to the output register 22 as shown in the figure. Alternatively, if it were desired for reasons of full and complete uniformity within the system to generate all 29 hashed output bits and thereby use a full 29 by 29 matrix in the hashing function, the rows 9 to 28 of the matrix could be modified whereby an identity sub matrix would appear on lines 9 through 28, columns 0 through 19 of the matrix. The remaining nine columns would be all zeros. As will be appreciated, this would cause bits 9 through 28 of the input address to be unaffected by the hashing operation. However, as stated previously in the present embodiment, it is assumed that the hashing function is dedicated to address generation and more particularly to memory module selection so that only the first high order 9 bits require hashing.

Referring now specifically to the sequential operations of the system. First, the desired matrix is loaded from the matrix store 10, via the multiplexor 24 Port A into the FIFO register array 26, a 29 bit line at a time, until all required 9 rows are loaded into the register array 26. As mentioned above, only nine 29 bit rows need be entered into the system since only nine bits of the full 29 bit address need to be permuted.

Next a new address S (0:28) is loaded into the input register 20 via line 12 in the indicated bit locations.

Next, bits 9 through 28 of the input register and of the new address to be hashed are gated directly into the output register 22 at bit positions 9 through 28 as indicated. As stated previously, at length, this allows bits 9 through 28 to appear as part of the hashed output address S' in unaltered form which for this particular application is desired.

Next, a loop counter within the system controls is set to the value i equals 8. This counter is not shown but is fully conventional in such FIFO register arrays. By control of this and/or other counters the register array may be operated as a FIFO, LIFO or for some other random accessing basis.

Under control of the loop counter the i sup th row of the matrix, A(i) is gated to the output of the FIFO 26. At the same time, the row is made available to input of the FIFO via the multiplexor 24 Part B. It is to be noted that this data path is provided in case the FIFO is a series of nine 29 bit shift registers wherein the counter would be checked against the number of shifts rather than used to access a particular row. However, as will be well appreciated this design detail would be optional. The primary requirement is that the various rows of the matrix be made successively available at the output of the FIFO and thus to the input to the inner-product functional block 28 where the bit matrix multiplication operation is actually performed.

It will also be noted that bits 0 through 29 of the input register 20 are always available as a second input to the inner-product functional block 28. Thus, performing the inner-product multiplication on a row of the matrix comprising 29 bits with the input address comprising 29 bits ultimately produces a single bit which is gated into the output register 22 at the appropriate storage location.

Thus, the one bit output, IPOUT, on line 27, is shifted into the upper position the output register 22. The upper nine bit positions (0:8) of register 22 function as a nine bit serial input parallel output shift register. Thus, each time a new bit is loaded into the top of the register all of the current contents shift down one bit position (ending of course with position 8). As will be apparent to those skilled in the art, once the upper nine bit positions of the output register 22 have been loaded with the new permuted address bits, the entire contents of the register (0:28) may be shifted out and form the new permuted output address S'.

To continue with the operation of the system, the control or loop counter is tested to see if nine iterations of inner-product generation have occurred and if not the counter i is decremented by one and the previously described steps loading a new row into the matrix and performing an inner-product generation are repeated and a new bit is gated into the output register 22.

Once the required iterations have been performed, the system controls indicate that the new output address S' may be gated from the bit-matrix multiplication unit to the memory system and one of three things may occur, either the procedure ENDs, a new matrix is loaded into the system prior to performing any further address permutations, or a new address may be loaded into the input register to be hashed by the current matrix.

A concise and complete description of the previously described operation of the hardware is given in TABLE 5 and in a somewhat more descriptive fashion in TABLE 6. It is to be noted that many of the trivial details of the operation of this system are not specifically shown such as, shifting lines, decrementing lines, gating lines, parity checking circuitry, hand shaking procedures and operations etc., as they are considered to be within the purview of those skilled in the art and the inclusion of same would clearly obfuscate the overall concepts of the invention as set forth herein.

## TABLE 5

1. FIFO < __(selected matrix)__ MATRIX STORE    (MPX: PORT A)

2. INREG (0:28) ←—S(9:28)

3. OUTREG (0:28) ←—S(9:28)

4. SET i ←—8

5. FFIN ←— FOUT ←—M(i)                        (MPX: PORT B)

6. IPOUT = FFOUT S(0:28) $\circledast$  (where $\circledast$ denotes INNER PROD>OPER.)

7. OUTREG (0:8) It __(SHIFT IN)__ IPOUT

8. TEST i:

   IF i ≠ 0:

   THEN: DECREMENT i

       GO TO 5

   ELSE:  CONTINUE

9. OUTREG (0:28) IS VALID

10. If new matrix is to be loaded, go to step 1;

    If new address is to be hashed, go to step 2.


## TABLE 6

1. Load desired matrix (9 rows, 29 bits/row) from MATRIX STORE into FIFO.
2. Load new address into input register.
3. Copy bits 9 through 28 from input register to output register.
4. Set loop counter: i = 8.
5. Bring $i^{th}$ row of matrix, M(i), to output of FIFO. Write copy of same to input of FIFO.
6. Output of inner-product function box, IPOUT, is the 1-bit inner product of the FIFO output (FFOUT) and the input register contents [S(0:28)].

7. The 1-bit output, IPOUT, is shifted into (downward in Fig. 2) the 9-bit shift register portion of OUTREG, viz. into OUTREG (0:8).

8. The counter is tested to see if 9 iterations of steps 5 through 7 have been done. (If not done, decrement counter i and go to step 5; if done, continue (to next step)).

9. Signal to destination that output is valid.

10. Go to Step 1, or 2.

It is further noted that a particular hardware design for performing the present invention could take on many different forms, the approach taken in the present embodiment being time-iterative as opposed to space or hardware iterative. Thus, a minimum amount of hardware is used repeatedly to generate the individual output bits $S'$. An alternate approach would have been in which the time to completely hash an address is minimized at the expense of replicating the inner-product hardware to provide nine separate functional units to compute the nine hashed output bits $S'$ (0:8) in parallel. Thus, it should be understood that the disclosed preferred embodiment is preferred in the sense of total hardware cost as opposed to minimum time to complete the operation.

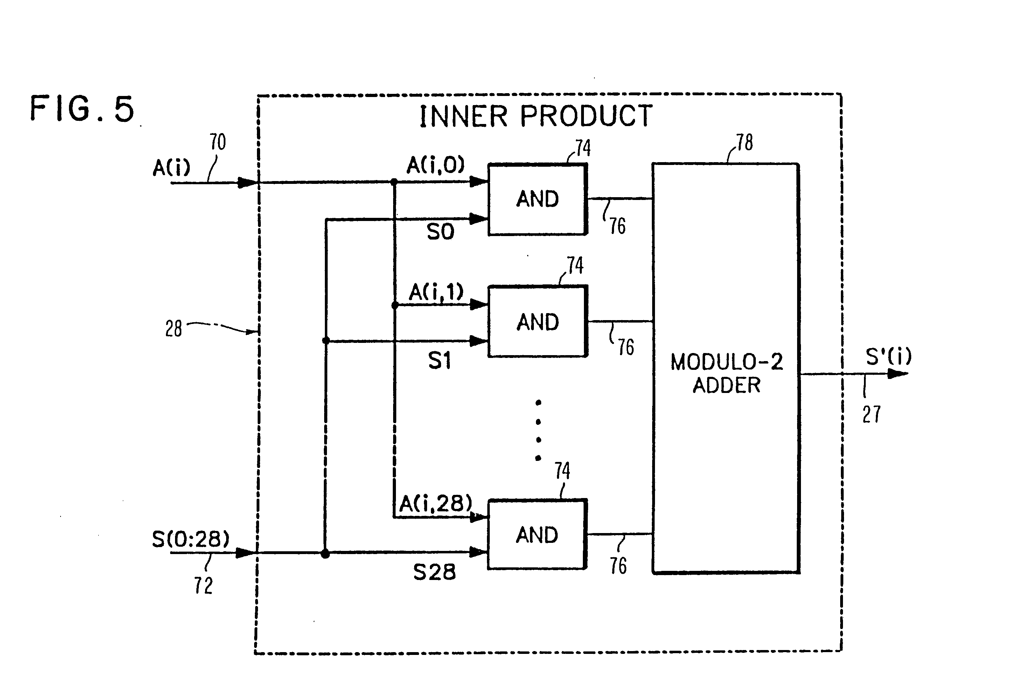

Fig. 5 comprises a detailed logical schematic diagram of how an inner-product block 28, as shown in Fig. 4, could be embodied. The figure illustrates specifically the circuitry for generating the $i^{th}$ significant bit $S'$ (i) using as inputs:

1. The 29 bit real address $S_{(0,31)}$ supplied to the block on line 72 from register 20.

2. The 29 bit $i^{th}$ row of the matrix A supplied to the block on line 70 from register 26.

The address and row bits are supplied to 29 AND circuits 74 wherein bits S0 and A (i,0) are supplied to the upper AND gate and bits S 28 and A (i, 28) are supplied to the lower AND gate. All 29 outputs appearing on the lines 76 form the inputs to a modulo-2 adder 78 which combines these 29 inputs into a single output bit via a logical modulo-2 addition function. This could be performed by an "exclusive-OR" tree as will be understood by those skilled in the art. It will, of course, be understood that the inner-product function may be performed by a number of different logical circuit configurations. The output S(i) is placed on line 27 which is the input to the register 22.

As described previously this circuit will perform the required bit-matrix multiplication of the individual bits of the address and the currently supplied row from the hashing matrix.

This completes the description of the preferred embodiment of the invention. It will be apparent that by supplying suitable matrices to the matrix store block 10 a plurality of different permutation functions may be by the disclosed hardware for obtaining enhanced operation of a large shared memory. The elimination or minimization of power-of-two stride access problems is but one example of the type of problem which may be alleviated. Further, use of the invention should produce a better distribution of data in other types of memory systems wherein, due to the unusual characteristics of the data, a poor utilization of the overall memory space would occur as described previously. Further, the utilization of multiple I/O devices may be enhanced by hashing their selection (addressing) via the presently disclosed invention utilizing a hashing matrix designed specifically for this purpose. It is noted that such matrices must be nonsingular.

Having thus described the invention with reference to the preferred embodiment, it will be apparent that other changes and modifications to the particular hardware than those previously described may be made by persons skilled in the art without departing from the spirit scope of the invention as set forth in the appended claims.

This completes the description of the disclosed preferred hardware embodiment which is capable of performing the overall bit-matrix multiplication permutation procedure of the present invention. Other configurations could be readily designed by those skilled in the art.

Fig. 6 illustrates an inverted baseline network which is typical of one such type of interconnection network used in highly parallel shared memory systems. The configuration of this network allows a conflict free data routing for all power-of-two stride accesses, if and only if, such addresses were permuted in accordance with the present invention prior to routing. This system forms no part of the present invention and is shown for illustrative purposes only. As will be apparent to those skilled in the art, it is a multi-stage, two-sided blocking network. Very briefly, the operation is as follows. The three columns of switches, marked A, B, C, will connect either of the two inputs to a particular output depending upon the setting of the address subfield. In this case, the upper output of each switch would be active if the field were 0 and the bottom output would be active if the address or subfield were a 1. The column of the binary numbers to the left represent source or user addresses and the column of three bit binary numbers at the right represents destination or server addresses. It will be noted that the same number appearing in the same row of both columns indicates that the source is also the destination or server. Thus in the figure, if the source 000

15

wishes to utilize its own memory, it would provide a destination address of 000. As will be understood, this results in the upper switches in all three columns being selected to their upper outputs because of the destination address 000 being given to the switch control matrix. Again, examining the figure it will be noticed that the small subfields a, b, and c in the figure designate the particular subfields which control the switch columns A, B, and C. Thus, if it were desired to connect source 011 to destination 111, the address 111 would be given by the source 011 which would cause the lower outputs of the three switches 90, 92, and 94 to be actuated which would effect this connection.

As a second example, suppose it were desired to connect source 001 to destination 110, in this case, the address or matrix switch command 110 would be presented to the switch control matrix for the network by source 001 which would cause the lower outputs of switch blocks 96 and 92 to be active and the upper output of block 94 to be active which would effect the desired routing. Thus, any desired interconnection between source and destination may be effectuated by the system. As stated previously, of course, switch contention or the passage of two requests through the same switch at the same time, could be alleviated by utilizing a selected matrix as herein described in the disclosed address permutation procedure.

Having completed the description of the herein described address permutation system for improving the utilization of certain physical devices, such as the individual modules of a large shared interleaved memory system, certain conclusions may be reached. The system is of particular value in avoiding memory or I/O hot spots which would result when many processors reference data separated in addresses by powers-of-two. Network contention as well can be avoided by an appropriate choice of the mapping function. It has been shown for example that all contention in an inverted baseline network can be avoided for all power-of-two stride accesses. The method does not totally eliminate contention of other stride accesses, however such contention is comparable to the contention associated with random memory references.

By use of the present invention, a hardware realization of the disclosed address permutation method, a wide variety of matrices may be readily stored in the system and automatically invoked with a minimum of effort to effect different permutation patterns which in turn achieve improved resource management for a variety of different conditions. The hardware is readily implementable in known technology and is capable of operation without significantly increasing, for example, overall memory access times.

The specific examples of the use of the invention described herein provide only a limited number of applications for the procedure. It is believed that use of the present invention will yield improved access methods for a variety of network topologies, and will be useful in I/O system designs. While the disclosed hardware implementation of the procedure represents the preferred embodiment of the invention, it should be clearly understood that it could be possible to make many changes in the hardware as described previously without departing from the spirit and scope of the invention.

## Claims

1. An address permutation apparatus for optimizing the accessibility of a plurality of utilization devices, to a plurality of addressable server devices wherein the address permutation function comprises a bit-matrix multiplication of a selected field of a subject n-bit address with one of a group of different m x n permutation matrices, each of which produces a different permutation, wherein said apparatus comprises a matrix multiply unit including,
means for storing selected permutation matrices,
means for accessing a desired matrix from said memory,
means for accessing an address to be permuted,
means for performing a bit-matrix multiplication of a selected n-bit field of said address with m successive n-bit rows of said accessed matrix and,
means for accumulating, the permuted m bits and utilizing same for accessing a particular utilization device.

2. An address permutation apparatus as set forth in Claim 1, wherein said bit-matrix multiplication means includes,
at least one inner-product block which receives the n-bits of the address to be permuted and a particular n-bit row of the matrix and performs a bit-row multiplication to produce a single permuted address bit; and
means for accumulating the m bits produced by said inner-product block in an output register for subsequent utilization by the system.

3. An address permutation apparatus as set forth in Claim 2, including as many separate inner-product blocks as there are bits of address field to be permuted and means for accumulating the output of said inner-product blocks in parallel for use as the permuted address field.

4. An address permutation apparatus as set forth in Claim 3, wherein each inner-product block comprises as many as 2 input AND gates as there are bits in a row of said matrix (matrix-bit) and in said total address (address bit) to be permuted, each AND gate having as input a different address bit and a corresponding matrix bit, means for connecting the output from said plurality of AND gates to the inputs of a modulo-2 adder, and means for utilizing outputs of said modulo-2 adders as the permuted n address bits for the original n-bit address field.

5. An address permutation apparatus as set forth in Claim 4, including, means for selecting subsets of a given matrix where only a limited number of bits require permutation because of a particular end use.

6. An address mapping system for the conversion of logical to physical addresses in a multi-user multi-server computer system which mapping system generates optimized stride accesses among said multi-server system including, means for accessing a permutation matrix and an n-bit object address, logic circuit means for performing a bit-matrix multiplication of said n-bit address with m predetermined n-bit rows of said matrix to produce an m-bit physical address and, means for utilizing said m-bit physical address to access said multi-server system.

7. An address mapping system as set forth in Claim 6 wherein there are $2^d$ server devices and where d < n, said utilizing means including means for accessing d low order bits of the logical address which were not altered by the address mapping means as an address offset within the addressed server device.

8. An address mapping system as set forth in Claim 6 wherein the multi-user multi-server system comprises a parallel processor having a plurality of processors and a plurality of separate memory modules simultaneously accessible to said plurality of processors over an interconnection network.

9. An address mapping system as set forth in Claim 7 including means for storing a plurality of different matrices and means for accessing a predetermined matrix for use in a designated address mapping operation.

10. An address mapping system as set forth in Claim 9, said bit-matrix multiplication means including, at least one inner-product block which concurrently receives the n-bits of the address to be permuted and a particular n-bit row of the matrix and performs a bit-row multiplication to produce a single permuted address bit; and means for accumulating the m bits produced by said inner-product block for subsequent use by said utilizing means.

11. An address mapping system as set forth in Claim 10, including m separate, concurrently operable inner-product blocks each receiving a different n-bit row of the matrix and means for accumulating the output of said m inner-product blocks in parallel for use as the physical memory module address.

12. An address mapping system as set forth in Claim 11, wherein each inner-product block comprises as many as 2 input AND gates as there are bits in a row of said matrix (matrix-bit) and in said logical address (address bit), to be permuted, each AND gate having as input a different address bit and a corresponding matrix bit, means for connecting the output from said plurality of AND gates to the inputs of a modulo-2 adder, and means for utilizing the outputs of said modulo-2 adders as the permuted n address bits for the original n-bit address field.

13. An address mapping system as set forth in Claim 12, including means for selecting subsets of a given matrix where only a limited number of bits require permutation because of a particular end use.

17

BM — YO 987 033

# FIG.1 A SHARED MEMORY PARALLEL PROCESSING SYSTEM

EP 0 313 787 A2

EP 0 313 787 A2

# FIG.2          ADDRESS TRANSFORMATION UNIT

INTERLEAVE AMOUNT          VIRTUAL ADDRESS (0, 28)

30

┌──────────────────┐ 32
│   SEGMENT/PAGE    │
│ TABLE TRANSLATION │
└──────────────────┘

REAL
ADDRESS

36

┌──────────────────┐ 40
│  MATRIX MULTIPLY  │ 34
│ (FIG.3)    UNIT   │
└──────────────────┘

38

NODE NUMBER (0, 8)          OFFSET (9, 28)

42

PHYSICAL ADDRESS (0, 28)

BM — YO 987 033

EP 0 313 787 A2

# FIG. 3

FIG. 4

MATRIX STORE 10

FIFO REGISTER 26

FF IN

A(0)
A(1)
....
A(8)

FF OUT

M P X 24

SELECT

PORT A

PORT B

A(i) 70

OUTPUT REGISTER 22

S'(i) 27

IP OUT

INNER PRODUCT (FIG.3) 28

S(0:28) 72

S'0
S'1
...
S'8
S'9
S'10
...
S'28

S'(0:28) 16

INPUT REGISTER 20

S0
S1
...
S8
S9
S10
...
S28

S(9:28)

S(0:28) 12

MATRIX HASHING FUNCTION 14

# FIG. 5

INNER PRODUCT

A(i) — 70

A(i,0)
S0
A(i,1)
S1
A(i,28)
S28

AND — 74
AND — 74
AND — 74

76
76
76

MODULO-2 ADDER — 78

S'(i) — 27

28

S(0:28) — 72

BM — YO 987 033

IBM – YO 987 033

# FIG.6 AN INVERTED BASELINE NETWORK

SOURCE     A     B     C     DESTINATION

DESTINATION ADDRESSES

EP 0 313 787 A2

# FIG. 7

## AVERAGE MAXIMUM CONFLICTS FOR A 512 INTERLEAVE MEMORY ACCESS

STRAIGHT INTERLEAVING

WITH RANDOM ADDRESSING

WITH BIT MATRIX MULTIPLICATION

LOG 2 (STRIDE ACCESS 2**n)

MAXIMUM CONFLICTS

# FIG. 8
## CONFLICTS WITH
## STRAIGHT INTERLEAVING

# FIG. 9
## CONFLICTS WITH BIT-MATRIX
## MULTIPLICATION AND INTERLEAVING

# FIG. 10

## CONFLICTS WITH
## INTERLEAVING AND BIT-MATRIX
## MULTIPLICATION WITH CONSTRAINT B RELAXED

RANDOM ACCESS

BIT-MATRIX
MULTIPLICATION
MAPPING

STRIDE ACCESS

MAXIMUM CONFLICTS

BM — YO 987 033